# EUROPÄISCHE PATENTSCHRIFT

(11) **EP 2 573 410 B1**
(45) Veröffentlichungstag und Bekanntmachung des Hinweises auf die Patenterteilung: **06.04.2016**
(21) Anmeldenummer: 12184428.6
(22) Anmeldetag: 14.09.2012
(51) Int. Cl.: F16B 39/24

(54) **Haltemittel mit einem axialen Durchgang zur Aufnahme eines Formatteiles**
Holder with an axial throughput for holding a format piece
Moyen de fixation avec un processus axial destiné à la saisie d'un élément de format

(30) Priorität: 20.09.2011 DE 102011053786
(43) Veröffentlichungstag der Anmeldung: 27.03.2013
(73) Patentinhaber: Krones Aktiengesellschaft, 93073 Neutraubling (DE)
(72) Erfinder: Kühn, Robert, 93073 Neutraubling (DE)
(74) Vertreter: Benninger, Johannes

(56) Entgegenhaltungen:
- DE-A1- 3 600 311
- FR-A1- 2 796 426
- US-A- 2 321 158
- US-A- 4 318 498
- US-A- 5 833 422

## Beschreibung

Die vorliegende Erfindung betrifft ein Haltemittel mit einem axialen Durchgang zur Aufnahme eines Formatteiles.

Haltemittel zur Sicherung gegen axiales Verschieben sind bereits aus dem Stand der Technik bekannt. Beispielsweise Sprengringe, Muttern oder Splintscheiben werden in zahlreichen Ausführungsformen hierfür verwendet. Diese Sicherungselemente erfordern Rillen oder Bohrungen in der Welle, so dass bei Fertigung der Welle ein zusätzlicher Arbeitsschritt notwendig ist. Weiterhin sind bereits Klemmscheiben bekannt, die auch glatte Wellen oder Achsen durch ihren scharfen Stanzgrat axial sichern können. Eine derartige Klemmscheibe offenbart beispielsweise die EP 1 150 025 A1. Die in der EP-Offenlegungsschrift gezeigte Klemmscheibe ist nur für eine einseitige Befestigung angedacht. Ein Lösen der Achse oder Welle entgegen der Einführrichtung ist nicht vorgesehen. Soll ein Lösen entgegen der Einführrichtung erfolgen, so muss die Klemmscheibe hierzu zerstört werden.

Eine ähnliche Klemmscheibe ist aus der DE 3600311 A1 bekannt. Die aus der DE-Offenlegungsschrift bekannte Klemmscheibe ist zur Verbindung mit einer Welle vorgesehen. Weiter ist ein Andrückstempel offenbart, mittels welchem die kraftbeaufschlagte Anlage von Biegekrallen an der Welle erhöht werden kann.

Um Klemmscheiben mehrmalig Nutzen zu können, sind weitere Haltemittel aus dem Stand der Technik bekannt, welche ein Aufheben der klemmenden Verbindung erlauben.

Beispielsweise zeigt die FR 2 796 426 A1 eine Scheibe mit Flügeln, durch welche eine Stift geführt ist. Weiter ist ein Mittel vorgesehen, welches über ein Innengewinde auf den Stift aufgesetzt ist und über welches die Flügel gespreizt werden können.

Auch die US 2,321,158 A offenbart ein Verbindungsmittel. Das Verbindungsmittel besitzt Zähne, die einen Bolzen greifen. Über ein Werkzeug können die Zähne auseinanderbewegt und der Bolzen hierauf abgezogen werden.

Aus der US 5,833,422 A ist zudem ein Haltemittel für einen Bolzen bekannt, das aus einem Kranz mit mehreren sich in Richtung des Bolzens erstreckenden Schneiden gebildet ist. Ein Hohlzylinder kann auf die Schneiden aufgesetzt werden, welch sich hierbei in Richtung weg von dem Bolzen beugen und den Bolzen freigeben.

Die US 4,318,498 A beschreibt zudem ein Haltemittel für einen Verteilkopf. Über eine Scheibe kann der Kolben des Verteilkopfes vertikal unbeweglich festgesetzt werden. Die Scheibe greift hierbei in eine Nut des Kolbens. Soll die Festsetzung der axialen Bewegung des Kolbens aufgehoben werden, so wird hierzu ein Fortsatz der Scheibe angehoben und die Scheibe aus der Nut geführt.

Aufgabe der Erfindung ist, ein Haltemittel zur axialen Sicherung von Formatteilen zur Verfügung zu stellen, bei welchem das Formatteil ohne Zerstörung des Haltemittels vom Haltemittel entgegen der Einführungsrichtung gelöst werden kann. Zudem soll das Haltemittel einfach ausgestaltet sein und das Lösen auf unkomplizierte Art und Weise erfolgen können. Zudem ist Aufgabe der vorliegenden Erfindung ein derartiges Haltemittel zur Verfügung zu stellen, bei welchem die Gefahr seiner Beschädigung auch bei wiederholter Fixierung von Formatteilen zumindest reduziert werden kann.

Die obige Aufgabe wird durch ein Haltemittel gelöst, welches die Merkmale in dem Patentanspruch 1 umfasst. Weitere vorteilhafte Ausgestaltungen werden durch die Unteransprüche beschrieben.

Die Erfindung betrifft ein Haltemittel mit einem axialen Durchgang zur Aufnahme eines Formatteils. Das Formatteil kann beispielsweise eine Welle und/oder einen Bolzen enthalten, welcher bei Aufnahme durch den axialen Durchgang des Haltemittels geführt ist. Beispielsweise können als Formatteile Konstruktionsbauteile oder Arbeitsinstrumente Verwendung finden. Beispielsweise können somit Formatteile aus dem Automotive-Bereich, aus der elektrischen Verbindungstechnik, aus dem Sondermaschinenbau oder dem Spielzeugbereich verwendet werden.

Es sind mehrere in Richtung des Formatteiles weisende und entgegen einer Außenmantelfläche des Formatteiles winklig angestellte und elastisch verformbare Klemmzungen vorgesehen. Beispielsweise können mindestens drei Klemmzungen vorgesehen sein, welche radial um die axiale Aufnahme angeordnet sind. Ferner können die Klemmzungen beispielsweise aus Federstahl gefertigt sein. Auch andere Materialen die elastische, viskoelastische oder hyperelastisch Eigenschaften aufweisen, können zur Ausgestaltung der Klemmzungen verwendet werden. Weiterhin ist vorstellbar, dass als Material für die Klemmzungen Verbundwerkstoffe mit vergleichbaren Materialeigenschaften gewählt werden.

Ferner ist vorgesehen, dass das Formatteil bei Oberflächenkontakt seiner Außenmantelfläche mit den Klemmzungen in einer ersten Bewegungsrichtung ortsfest gehalten und in einer zweiten Bewegungsrichtung, welche der ersten Bewegungsrichtung entgegengerichtet ist, bewegbar und/oder führbar ist. Das Formatteil kann somit bei Aufnahme lediglich axial und in einer Bewegungsrichtung führbar und/oder bewegbar sein. Vorzugsweise erfolgt bei Oberflächenkontakt der Klemmzungen mit der Außenmantelfläche des Formatteiles ein Kraftschluss zwischen den Klemmzungen und dem Formatteil. Die Klemmzungen können hierbei an ihren freien Enden einen scharfen Grat und/oder eine scharfe Kante aufweisen, die der Halterung des jeweiligen Formatteils dienen.

Erfindungsgemäß ist zudem ein Stellmittel vorgesehen, wobei bei Betätigung und/oder definierter Ausrichtung des mindestens einen Stellmittels der Oberflächenkontakt zwischen den jeweiligen Klemmzungen und dem Formatteil aufgehoben wird. Es kann vorgesehen sein, dass bei definierter Ausrichtung des Stellmittels und/oder bei Betätigung des Stellmittels, das Stellmittel derart mit den Klemmzungen in Kontakt gebracht wird, dass die Klemmzungen elastisch verformt werden und sich somit von der Außenmantelfläche des Formatteiles weg bewegen. Dadurch wird insbesondere der Kraftschluss zwischen den Klemmzungen und dem Formatteil aufgehoben.

Die definierte Ausrichtung und/oder die Betätigung des Stellmittels kann beispielsweise durch Führung des Stellmittels in die zweite Bewegungsrichtung bzw. durch Führung des Stellmittels in die Bewegungsrichtung, in welche das Formatteil bewegbar und/oder führbar ist, erfolgen. Hierbei kann das Stellmittel zur Führung mit geeigneten Roll- und/oder Gleitlagern in Verbindung stehen. Auch ist vorstellbar, dass Rast- und/oder Schnapp- und/oder Klemmverbindungen vorhanden sind, um das Stellmittel entriegelbar in der definierten Ausrichtung und/oder betätigt zu halten.

In einer bevorzugten Ausführungsform ist das mindestens eine Stellmittel entlang einer parallel zur Außenmantelfläche des Formatteiles verlaufenden Achse verschiebbar gelagert. Weiterhin kann bei Betätigung und/oder definierter Ausrichtung des mindestens einen Stellmittels eine reversible elastische Verformung und/oder eine reversible elastische Biegung der winklig angestellten Klemmzungen ausgelöst werden. Hierbei kann das Stellmittel gegen die Klemmzungen geführt werden, wodurch die Klemmzungen von der Außenmantelfläche des Formatteiles weggedrückt werden. Vorzugsweise wird das Stellmittel gleichzeitig gegen sämtliche Klemmzungen geführt und hebt somit zeitgleich den Oberflächenkontakt zwischen sämtlichen Klemmzungen und der Außenmantelfläche des Formatteiles auf.

Weiterhin ist denkbar, dass das Haltemittel einen oberen Grundkörper und einen unteren Grundkörper umfasst. Der obere Grundkörper und der untere Grundkörper können als separate Bauteile des Haltemittels ausgebildet sein. Ferner kann der obere Grundkörper zusammen mit dem unteren Grundkörper einen konusförmigen Innenraum bilden oder einen konusförmigen Innenraum umschließen, innerhalb dessen die winklig angestellten Klemmzungen und/oder das Formatteil bei Oberflächenkontakt seiner Außenmantelfläche mit den Klemmzungen zumindest abschnittsweise angeordnet sind. Es kann vorgesehen sein, dass der obere Grundkörper eine Öffnung aufweist, die als Ausgang für das Formatteil ausgebildet ist. Die Öffnung kann hierbei in den konusförmigen Innenraum münden.

Insbesondere weisen sowohl der obere als auch der untere Grundkörper eine weitgehend axial angeordnete Öffnung auf, so dass die Öffnungen des oberen Grundkörpers, des unteren Grundkörpers und des Haltemittels in der zusammengebauten Einheit eine Durchtrittsöffnung für das Formatteil bilden.

Auch können die Klemmzungen Bestandteil einer einstückig ausgebildeten Komponente, insbesondere einer Klemmscheibe, des Haltemittels sein. Beispielsweise kann die einstückige Komponente durch Trennen (Stanzen) und zweistufigem Umformen hergestellt sein. Die einstückige Komponente kann hierbei zwischen dem oberen Grundkörper und dem unteren Grundkörper angeordnet sein. Weiterhin kann der obere Grundkörper an dem unteren Grundkörper und/oder die einstückige Komponente an dem oberen und/oder unteren Grundkörper über Bohrungen fixierbar und insbesondere verschraubbar sein. Auch ist vorstellbar, dass die einstückige Komponente zwischen dem oberen Grundkörper und dem unteren Grundkörper klemmbar ist. Die Bohrungen der einstückigen Komponente können hierbei kreisförmig ausgebildet sein und/oder radial um den axialen Durchgang angeordnet sein. Vorstellbar ist hierbei, dass sämtliche Bohrungen einen gleichen Abstand zu dem axialen Durchgang aufweisen.

Es kann weiterhin vorgesehen sein, dass die Klemmzungen auf entgegengesetzten Seiten jeweils zwei Breitseitenflächen beinhalten, die in Richtung des axialen Durchgangs eine sich verjüngende Formgebung aufweisen.

Auch kann es ein, dass die Klemmzungen jeweils eine erste winklige Anstellung zu einer senkrecht zur Außenmantelfläche des Formatteiles verlaufenden Achse aufweisen und eine zweite winklige Anstellung aufweisen, wobei die zweite winklige Anstellung sich näher am Formatteil und/oder am axialen Durchgang als die erste winklige Anstellung befindet und entgegen der ersten winkligen Anstellung angestellt ist. Die zweite optionale winklige Anstellung hat sich in der Praxis bewährt, um eine bessere Auflage der Klemmzungen am Formatteil bei Oberflächenkontakt herzustellen. Hierbei kann es sein, dass der erste Winkel durch einen Winkel zwischen 0º und 90º und insbesondere durch einen Winkel von 45º bei aufgehobenem Kontakt zwischen den Klemmzungen und der Außenmantelfläche des Formatteiles definiert ist. In einer bevorzugten Ausführungsform der vorliegenden Erfindung ist die zweite winklige Anstellung durch einen kleineren Winkel als die erste winklige Anstellung definiert. Bevorzugt kann die erste winklige Anstellung in Richtung des oberen Grundkörpers und die zweite winklige Anstellung in Richtung des unteren Grundkörpers angestellt sein. Hierbei kann die Klemmzunge im Bereich der ersten winkligen Anstellung mit der senkrecht zur Außenmantelfläche des Formatteils verlaufenden Achse einen ersten Winkel einschließen und die Klemmzunge im Bereich der zweiten winkligen Anstellung mit der senkrecht zur Außenmantelfläche des Formatteils verlaufenden Achse einen zweiten Winkel einschließen. Der erste Winkel kann hierbei größer als der zweite Winkel ausgebildet sein.

In der Praxis haben sich Ausführungsformen bewährt, bei denen das Formatteil bei Oberflächenkontakt seiner Außenmantelfläche mit den Klemmzungen und bei Betätigung und/oder definierter Ausrichtung des mindestens einen Stellmittels durch das mindestens eine Stellmittel stützbar und/oder führbar ist. Beispielsweise kann das Stellmittel durch einen Hohlzylinder oder weitere geometrische Hohlkörper gebildet sein, deren Innenraum einen Eingang zur Aufnahme des Formatteiles bildet. Bei Aufnahme des Formatteiles kann das Formatteil an einer Innenmantelfläche des Hohlkörpers anliegen. Der Eingang kann hierbei in den konusförmigen Innenraum münden und den gleichen Durchmesser wie der bereits zuvor erwähnte Ausgang des oberen Grundkörpers aufweisen. Beispielsweise ist vorstellbar, dass das Stellmittel über geeignete Roll- und/oder Gleitlager und/oder weitere Lager mit dem unteren Grundkörper in Verbindung steht. Auch kann das Stellmittel auf seiner dem Formatteil zugewandten Seite mehrere Roll- und/oder Gleitlager und/oder weitere Lager besitzen.

Beispielsweise kann das Haltemittel zur Aufnahme eines Befestigungsmittels mit einer Achse und/oder einem Bolzen und insbesondere zur Aufnahme eines Heizdorns ausgebildet sein. Der Heizdorn kann hierbei beispielsweise Bestandteil einer Heizvorrichtung für Vorformlinge sein und zur Erwärmung der Vorformlinge dienen. Sollen Vorformlinge mit jeweils unterschiedlicher Geometrie erwärmt werden, so kann es notwendig sein, in Abhängigkeit der Geometrie der jeweiligen Vorformlinge unterschiedliche Heizdorne in der Heizvorrichtung installieren zu müssen. Hierfür ist es notwendig, den Heizdorn vom Haltemittel abzunehmen und zu wechseln. Insbesondere um diesen Wechselvorgang zeitoptimiert und unkompliziert umsetzen zu können, hat sich das erfindungsgemäße Haltemittel bewährt. Vorstellbar ist hierbei, dass der Heizstrecke weitere Stationen, wie beispielweise ein Blasformmodul, nachgeordnet sind. Vorteilhaft wäre ein derartiger Aufbau aus Heizvorrichtung und Blasformmodul beispielsweise in einer Blasmaschine bzw. einer Streckblasmaschine.

Weiterhin kann vorgesehen sein, dass mit dem Haltemittel auch Formatteile lösbar befestigt werden können, die beispielsweise eine Außenmantelfläche mit halbkreisförmiger und/oder polygoner Formgebung besitzen. In diesem Fall muss die Geometrie der Klemmzungen derart gewählt werden, dass sie zum ortsfesten Halten des Formatteils geeignet ist. Denkbar ist hierbei, dass die freien Enden der Klemmzungen zusammen mit der Außenmantelfläche des Formatteils formschlüssig ausgebildet sind. Sowohl konkave als auch konvexe Formgebungen sind für die Geometrie des Formatteils vorstellbar.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt einen schematischen Querschnitt durch eine Ausführungsform eines erfindungsgemäßen Haltemittels;
Figur 2 zeigt eine schematische Draufsicht auf eine Klemmscheibe, wie sie Bestandteil einer Ausführungsform eines erfindungsgemäßen Haltemittels sein kann.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

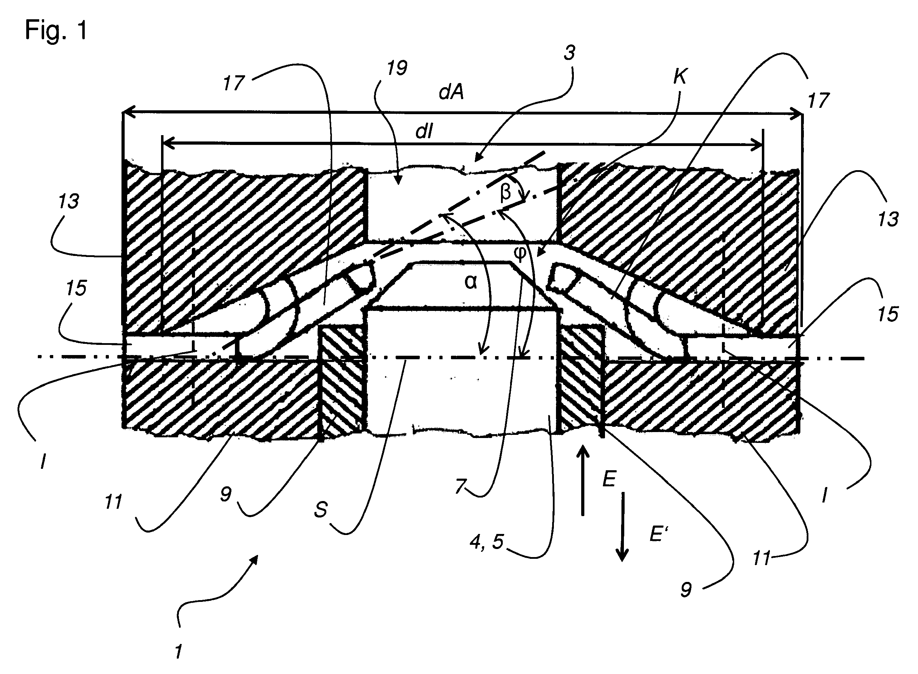

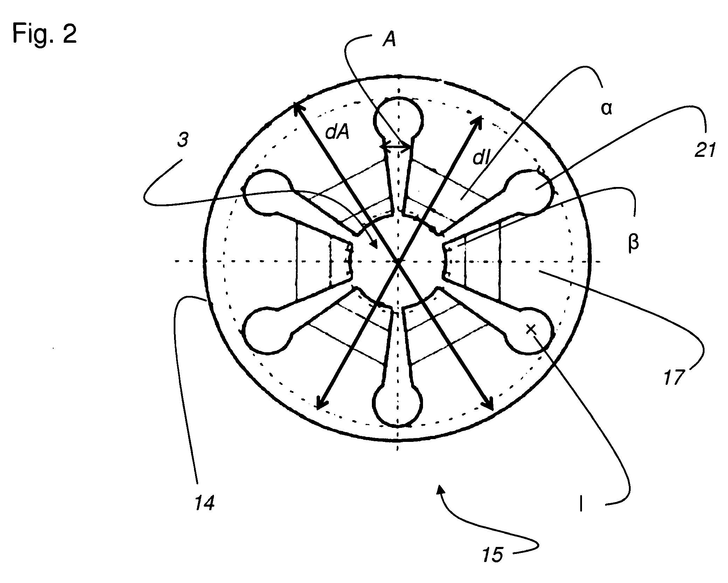

Figur 1 zeigt einen schematischen Querschnitt durch eine Ausführungsform eines erfindungsgemäßen Haltemittels 1. Das Haltemittel 1 besitzt einen axialen Durchgang 3 zur Aufnahme eines Formatteiles 4, welches vorliegend als Heizdorn 5 ausgebildet ist. Der Heizdorn 5 ist an einem freien Ende mit einer Fase 7 versehen und wird in einer Bewegungsrichtung E durch ein Stellmittel 9 geführt. Das Stellmittel 9, welches vorliegend als Hohlzylinder ausgebildet ist, steht hierbei in Oberflächenkontakt mit dem Formatteil 4 bzw. mit dem Heizdorn 5. Weiterhin ist das Stellmittel 9 in der Bewegungsrichtung E und entgegen dieser Bewegungsrichtung E in einer Bewegungsrichtung E' verschiebbar und gleitbeweglich an einem unteren Grundkörper 11 angeordnet. Zwischen dem unteren Grundkörper 11 und einem oberen Grundkörper 13 befindet sich eine Klemmscheibe 15 (detailliert in Figur 2) mit Klemmzungen 17. Über Bohrungen 21 (vgl. Figur 2) der Klemmscheibe 15, deren mögliche Position durch die gestrichelten Linien I angedeutet wird, ist die Klemmscheibe 15 mittels Schraubverbindungen an dem oberen Grundkörper 13 und an dem unteren Grundkörper 11 fixiert. Wie weiterhin in Figur 1 zu erkennen ist, sind die Klemmzungen 17 entgegen einer Außenmantelfläche des Formatteiles 4 bzw. des Heizdorns 5 winklig angestellt. Die Klemmzungen 17 besitzen hierbei gegenüber einer vertikal zur Außenmantelfläche des Formatteiles 4 verlaufenden Achse S eine erste winklige Anstellung α sowie eine zweite winklige Anstellung β. Die zweite winklige Anstellung β befindet sich näher am Formatteil 4 und ist entgegen der winkligen Anstellung α angestellt. Die erste winklige Anstellung α ist in Richtung des oberen Grundkörpers 13 angestellt. Die zweite winklige Anstellung β ist in Richtung des unteren Grundkörpers 11 angestellt. Der Winkel α beträgt im gezeigten Ausführungsbeispiel 45°. Im Bereich der zweiten winkligen Anstellung β ist die Klemmzunge 17 um einen Winkel ϕ entgegen der senkrecht zur Außenmantelfläche des Formatteiles 4 verlaufenden Achse S angestellt. Der Winkel ϕ ist hierbei kleiner als der Winkel α ausgebildet. Es gilt zudem: α = ϕ + β. Das Stellmittel 9 ist in Figur 1 nicht betätigt und demnach nicht in Kontakt mit den Klemmzungen 17 gebracht. Der obere Grundkörper 13 bildet zusammen mit dem unteren Grundkörper 11 einen konusförmigen Innenraum K, innerhalb dessen die Klemmzungen 17 angeordnet sind. Weiterhin weist der obere Grundkörper 13 einen Ausgang 19 auf, durch welchen das Formatteil 4 bzw. der Heizdorn 5 geführt werden kann. Wird das Formatteil 4 bzw. der Heizdorn 5 durch den Ausgang 19 geführt, so tritt es mit den Klemmzungen 17 in Oberflächenkontakt. Die Klemmzungen 17 liegen hierbei an der Außenmantelfläche des Formatteiles 4 an und halten das Formatteil 4 unter Kraftschluss. Eine Bewegung des Formatteiles 4 entgegen der Bewegungsrichtung E in die Bewegungsrichtung E' wird somit unterbunden, während eine Bewegung des Formatteiles 4 in der Bewegungsrichtung E weiterhin möglich ist. Soll eine Rückführung des Formatteils 4 entgegen der Bewegungsrichtung E erfolgen, so wird das Stellmittel 9 betätigt bzw. gegen die Klemmzungen 17 geführt. Aufgrund ihrer elastischen Ausbildung bewegen sich die Klemmzungen 17 hierbei vom Formatteil 4 weg, so dass der Winkel α vergrößert wird. Dadurch ist der Kraftschluss zwischen den Klemmzungen 17 und dem Formatteil 4 aufgehoben. Das Formatteil 4 kann nunmehr entgegen der Bewegungsrichtung E vom Haltemittel 1 abgenommen werden. Wird das Stellmittel 9 entgegen der Bewegungsrichtung E geführt, so verliert es seinen Kontakt zu den Klemmzungen 17. Die Klemmzungen 17 werden aufgrund ihrer elastischen Materialeigenschaften reversibel rückverformt und nehmen die in Figur 1 dargestellte Position ein. Weiterhin ist zu erkennen, dass der obere Grundkörper 13 einen äußeren Durchmesser dA und einen inneren Durchmesser dl aufweist. Im Bereich zwischen dem inneren Durchmesser dl und dem äußeren Durchmesser dA ist die Kontaktscheibe 17 zwischen dem oberen und dem unteren Grundkörper 11, 13 geklemmt.

Figur 2 zeigt eine schematische Draufsicht auf eine Klemmscheibe 15, wie sie Bestandteil einer Ausführungsform eines erfindungsgemäßen Haltemittels 1 sein kann. Zu erkennen sind der äußere Durchmesser dA und der innere Durchmesser dl, welche in Figur 1 beschrieben wurden. Die Klemmscheibe 15 ist im Ausführungsbeispiel der Figur 2 kreisförmig ausgebildet. Die Klemmzungen 17, welche um den axialen Durchgang 3 angeordnet sind, bilden hierbei eine Aufnahme für ein Formatteil 4 mit zylindrischer Außenmantelfläche. Die Bohrungen 21 sind radial um den axialen Durchgang 3 angeordnet. Die Breitseiten der Klemmzungen 17 besitzen, wie in Figur 2 zu erkennen, eine sich in Richtung des axialen Durchgangs 3 verjüngende Formgebung. Die Verjüngung ist derart ausgebildet, dass der seitliche Abstand A einer Klemmzunge 17 zu seinen benachbarten Klemmzungen 17 in Richtung des axialen Durchgangs 3 konstant vermindert wird.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Haltemittel
- 3: axialer Durchgang
- 4: Formatteil
- 5: Heizdorn
- 7: Fase
- 9: Stellmittel
- 11: unterer Grundkörper
- 13: oberer Grundkörper
- 15: Klemmscheibe
- 17: Klemmzungen
- 19: Ausgang
- 21: Bohrung

- A: Abstand
- dA: äußerer Durchmesser
- dl: innerer Durchmesser
- E: Bewegungsrichtung
- E': entgegengerichtete Bewegungsrichtung
- I: Achse (Bohrungen)
- K: konusförmiger Innenraum
- S: vertikale Achse
- α: erste winklige Anstellung
- β: zweite winklige Anstellung
- ϕ: Winkel

## Patentansprüche

1. Haltemittel (1) mit einem axialen Durchgang (3) zur Aufnahme eines Formatteils (4), insbesondere eines Konstruktionsbauteils oder eines Arbeitsinstrumentes, mit mehreren in Richtung des Formatteils (4) weisenden und entgegen einer Außenmantelfläche des Formatteils (4) winklig angestellten und elastisch verformbaren Klemmzungen (17), wobei das Formatteil (4) bei Oberflächenkontakt seiner Außenmantelfläche mit den Klemmzungen (17) in einer ersten Bewegungsrichtung (E') ortsfest gehalten und in einer zweiten Bewegungsrichtung (E), welche der ersten Bewegungsrichtung (E') entgegengerichtet ist, bewegbar und/oder führbar ist, wobei das Haltemittel (1) mindestens ein Stellmittel (9) umfasst und bei Betätigung und/oder definierter Ausrichtung des mindestens einen Stellmittels (9) der Oberflächenkontakt zwischen den jeweiligen Klemmzungen (17) und dem Formatteil (4) aufgehoben ist, **dadurch gekennzeichnet, dass** das Haltemittel (1) einen oberen Grundkörper (13) und einen unteren Grundkörper (11) umfasst, die zusammen einen konusförmigen Innenraum (K) bilden, innerhalb dessen die winklig angestellten Klemmzungen (17) und das Formatteil (4) bei Oberflächenkontakt seiner Außenmantelfläche mit den Klemmzungen (17) zumindest abschnittsweise angeordnet sind.

2. Haltemittel (1) nach Anspruch 1, wobei das mindestens eine Stellmittel (9) entlang einer parallel zur Außenmantelfläche des Formatteils (4) verlaufenden Achse verschiebbar gelagert ist und wobei bei Betätigung und/oder definierter Ausrichtung des mindestens einen Stellmittels (9) eine reversible elastische Verformung und/oder eine reversible elastische Biegung der winklig angestellten Klemmzungen (17) bewirkbar ist.

3. Haltemittel (1) nach Anspruch 1 oder 2, wobei die Klemmzungen (17) Bestandteil einer einstückig ausgebildeten Komponente, insbesondere einer Klemmscheibe (15), des Haltemittels (1) sind, welche zwischen dem oberen Grundkörper (13) und dem unteren Grundkörper (11) angeordnet ist, wobei der obere Grundkörper (13) an dem unteren Grundkörper (11) und/oder die einstückige Komponente (15) an dem oberen und/oder unteren Grundkörper (13, 11) über Bohrungen (21) fixierbar und insbesondere verschraubbar ist.

4. Haltemittel (1) nach Anspruch 3, wobei die Bohrungen (21) der einstückigen Komponente (15) radial um den axialen Durchgang (3) angeordnet sind.

5. Haltemittel (1) nach einem oder mehreren der vorhergehenden Ansprüche, wobei die Klemmzungen (17) auf entgegengesetzten Seiten jeweils zwei Breitseitenflächen beinhalten, die in Richtung des axialen Durchgangs (3) eine sich verjüngende Formgebung aufweisen.

6. Haltemittel (1) nach einem oder mehreren der vorhergehenden Ansprüche, wobei die Klemmzungen (17) jeweils eine erste winklige Anstellung (α) zu einer senkrecht zur Außenmantelfläche des Formatteils (4) verlaufenden Achse (S) aufweisen und eine zweite winklige Anstellung (β) aufweisen, wobei die zweite winklige Anstellung (β) sich näher am axialen Durchgang (3) als die erste winklige Anstellung (α) befindet und entgegen der ersten winkligen Anstellung (α) angestellt ist

7. Haltemittel (1) nach Anspruch 6, bei welchem die erste winklige Anstellung (α) durch einen Winkel zwischen 0º und 90º und insbesondere durch einen Winkel von zumindest annäherungsweise 45º bei aufgehobenem Kontakt zwischen den Klemmzungen (17) und dem Formatteil (4) definiert ist.

8. Haltemittel (1) nach einem oder mehreren der vorhergehenden Ansprüche, wobei das Formatteil (4) bei Oberflächenkontakt seiner Außenmantelfläche mit den Klemmzungen (17) und bei Betätigung und/oder definierter Ausrichtung des mindestens einen Stellmittels (9) durch das mindestens eine Stellmittel (9) stützbar und/oder führbar ist.

9. Haltemittel (1) nach einem oder mehreren der vorhergehenden Ansprüche, wobei das Haltemittel (1) zur Aufnahme eines Formatteils (4) mit einer Achse und/oder einem Bolzen und insbesondere zur Aufnahme eines Heizdornes (5) in einer Heizeinrichtung ausgebildet ist.

10. Haltemittel (1) nach einem oder mehreren der vorhergehenden Ansprüche, wobei der obere Grundkörper (13) eine Öffnung aufweist, die als Ausgang (19) für das Formatteil (4) ausgebildet ist, wobei die Öffnung in den konusförmigen Innenraum (K) mündet.

## Claims

1. Retaining means (1) with an axial passage (3) for receiving a format part (4), especially for receiving a structural component or a working tool, comprising several clamping tongues (17) facing in the direction of the format part (4), the clamping tongues (17) being angularly aligned against an outer lateral surface of the format part (4) and being elastically deformable, whereby the format part (4) is held stationary in a first movement direction (E') by the clamping tongues (17) when its outer lateral surface is contacting the clamping tongues (17) and whereby the format part (4) is movable and / or guidable in a second movement direction (E), the second movement direction (E) being opposite to the first movement direction (E'), wherein the retaining means (1) comprises at least one adjustment means (9), wherein the surface contact between the respective clamping tongues (17) and the format part (4) is released upon actuation and / or upon a defined alignment of the at least one adjustment means (9), **characterized in that** wherein the retaining means (1) comprises an upper base body (13) and a lower base body (11), together forming a conical inner space (K), within which the angularly aligned clamping tongues (17) and / or the format part (4) are at least partially arranged in a state when the outer lateral surface of the format part (4) is in contact with the clamping tongues (17).

2. Retaining means (1) according to claim 1, wherein the at least one adjustment means (9) is slidable mounted along an axis, the axis extending parallel to an outer lateral surface of the format part (4), and whereby upon actuation and / or defined alignment of the at least one adjustment means (9) a reversible elastic deformation and / or a reversible elastic bending of the angularly aligned clamping tongues (17) is triggerable.

3. Retaining means (1) according to claim 1 or 2, wherein the clamping tongues (17) are part of a one- piece component of the retaining means (1), especially of a clamping disc (15), which is arranged between the upper base body (13) and the lower base body (11), and whereby the upper base body (13) is fixable via bore holes (21) to the lower base body (11) and / or whereby the one- piece component (15) is fixable via bore holes (21) to the upper base body (13) and / or to the lower base body (11), especially whereby the connection can be a screw connection.

4. Retaining means (1) according to claim 3, wherein the bore holes (21) of the one-piece component (15) are arranged radially around the axial passage (3).

5. Retaining means (1) according to one or more of the previous claims, wherein the clamping tongues (17) each have two wide side surface areas on opposite sides, showing a tapering in the direction of the axial passage (3).

6. Retaining means (1) according to one or more of the previous claims, wherein the clamping tongues (17) each have a first angular alignment (α) to an axis (S), the axis (S) extending perpendicular to an outer lateral surface of the format part (4), and wherein the clamping tongues (17) each have a second angular alignment (β), wherein the second angular alignment (β) is closer to the axial passage (3) than the first angular alignment (α) and wherein the second angular alignment (β) is set against the first angular alignment (α).

7. Retaining means (1) according to claim 6, wherein the first angular alignment (α) is defined by an angle between 0º und 90º, and especially wherein the first angular alignment (α) is defined by an angle of at least about 45° in the state with no contact between the clamping tongues (17) and the format part (4).

8. Retaining means (1) according to one or more of the previous claims, wherein the format part (4) is supportable and / or guidable by the at least one adjustment means (9) in the state with surface contact of the outer lateral surface of the format part (4) with the clamping tongues (17) and upon actuation and / or defined alignment of the at least one adjustment means (9).

9. Retaining means (1) according to one or more of the previous claims, wherein the retaining means (1) is designed for receiving a format part (4) with an axis and / or a bolt and especially for receiving a heating rod (5) in a heating device.

10. Retaining means (1) according to one or more of the previous claims, wherein the upper base body (13) comprises an opening, the opening being designed as an exit (19) for the format part (4), whereby the opening opens into a conical inner space (K).

## Revendications

1. Moyen de retenue (1) ayant un passage axial (3) pour recevoir un élément de format (4), en particulier un composant de construction ou un instrument de travail, comprenant une pluralité de languettes de serrage (17) qui montrent en direction de l'élément de format (4) et sont posées angulairement par rapport à une surface latérale extérieure de l'élément de format (4) et sont élastiquement déformables, dans lequel ledit élément de format (4), lors d'un contact de surface de sa surface latérale extérieure avec les languettes de serrage (17), est retenu de façon stationnaire dans une première direction de mouvement (E') et peut être déplacé et/ou guidé dans une deuxième direction de mouvement (E) qui est opposée à la première direction de mouvement (E'), ledit moyen de retenue (1) comprenant au moins un moyen de réglage (9), et, lors d'un actionnement et/ou d'une orientation définie dudit au moins un moyen de réglage (9), le contact de surface entre les languettes de serrage (17) respectives et l'élément de format (4) étant supprimé, **caractérisé par le fait que** ledit moyen de retenue (1) comprend un corps de base supérieur (13) et un corps de base inférieur (11) qui forment ensemble un espace intérieur (K) conique à l'intérieur duquel les languettes de serrage (17) posées angulairement et ledit élément de format (4), lors d'un contact de surface de sa surface latérale extérieure avec les languettes de serrage (17), sont disposés au moins par sections.

2. Moyen de retenue (1) selon la revendication 1, dans lequel ledit au moins un moyen de réglage (9) est logé à coulissement le long d'un axe s'étendant parallèlement à la surface latérale extérieure de l'élément de format (4), et dans lequel, lors de l'actionnement et/ou de l'orientation définie dudit au moins un moyen de réglage (9), une déformation élastique réversible et/ou une courbure élastique réversible des languettes de serrage (17) posées angulairement peut être provoquée.

3. Moyen de retenue (1) selon la revendication 1 ou 2, dans lequel les languettes de serrage (17) sont une partie constituante d'un composant réalisé en une seule pièce, en particulier d'un disque de serrage (15), du moyen de retenue (1), qui est disposé entre ledit corps de base supérieur (13) et ledit corps de base inférieur (11), le corps de base supérieur (13) pouvant être fixé et en particulier vissé, par des perçages (21), sur le corps de base inférieur (11) et/ou le composant (15) réalisé en une seule pièce pouvant être fixé et en particulier vissé, par des perçages (21), sur le corps de base supérieur et/ou inférieur (13, 11),

4. Moyen de retenue (1) selon la revendication 3, dans lequel les perçages (21) du composant (15) réalisé en une seule pièce sont disposés radialement autour du passage axial (3).

5. Moyen de retenue (1) selon l'une ou plusieurs des revendications précédentes, dans lequel les languettes de serrage (17) incluent, sur des côtés opposés, respectivement deux surfaces latérales larges qui présentent, en direction du passage axial (3), une conformation se rétrécissant.

6. Moyen de retenue (1) selon l'une ou plusieurs des revendications précédentes, dans lequel les languettes de serrage (17) présentent chacune une première inclinaison angulaire (α) par rapport à un axe (S) s'étendant perpendiculairement à la surface latérale extérieure de l'élément de format (4) ainsi qu'une deuxième inclinaison angulaire (β), la deuxième inclinaison angulaire (β) étant située plus près du passage axial (3) que la première inclinaison angulaire (α) et étant inclinée par rapport à la première inclinaison angulaire (α).

7. Moyen de retenue (1) selon la revendication 6, dans lequel la première inclinaison angulaire (α) est définie par un angle compris entre 0° et 90° et en particulier par un angle d'au moins approximativement 45° lorsque le contact entre les languettes de serrage (17) et l'élément de format (4) est supprimé.

8. Moyen de retenue (1) selon l'une ou plusieurs des revendications précédentes, dans lequel ledit élément de format (4), lors d'un contact de surface de sa surface latérale extérieure avec les languettes de serrage (17) et lors d'un actionnement et/ou d'une orientation définie dudit au moins un moyen de réglage (9), peut être appuyé et/ou guidé par ledit au moins un moyen de réglage (9).

9. Moyen de retenue (1) selon l'une ou plusieurs des revendications précédentes, dans lequel le moyen de retenue (1) est réalisé pour recevoir un élément de format (4) avec un axe et/ou un boulon et en particulier pour recevoir un mandrin de chauffage (5) dans un dispositif de chauffage.

10. Moyen de retenue (1) selon l'une ou plusieurs des revendications précédentes, dans lequel ledit corps de base supérieur (13) présente une ouverture qui est réalisée en tant que sortie (19) pour l'élément de format (4), ladite ouverture débouchant dans l'espace intérieur (K) conique.
